Europäisches Patentamt

European Patent Office

Office européen des brevets

(19)

(11) Numéro de publication: **0 084 524**
**A2**

## (12) DEMANDE DE BREVET EUROPEEN

(21) Numéro de dépôt: **83830004.4**

(22) Date de dépôt: **11.01.83**

(51) Int. Cl.³: **B 29 B 1/00**
**B 29 C 29/00**

(30) Priorité: **25.01.82 IT 60382**

(43) Date de publication de la demande:
**27.07.83 Bulletin 83/30**

(84) Etats contractants désignés:
**AT BE CH DE FR GB LI LU NL SE**

(71) Demandeur: **Ferretti, Fernando**
**Via Candia, 350/L**
**I-60100 - Ancona(IT)**

(72) Inventeur: **Ferretti, Fernando**
**Via Candia, 350/L**
**I-60100 - Ancona(IT)**

(74) Mandataire: **Baldi, Claudio**
**Viale della Vittoria 97**
**I-60035 Jesi (Ancona)(IT)**

(54) **Procédé et relative machine pour la récupération des effritements industriels en matériel thermoplastique.**

(57) L'invention présente regarde un procédé et sa machine pour la récupération des effritements industriels en matériel thermoplastique, comme par exemple les masselottes, les bavures, les débris, les coupures des films.

La procédé conformément à l'invention se base essentiellement sur la idée de transformer les effritements en un produit granulaire, aux dimensions régulières et uniformes, en pressant, en coupant et en thermosoudant dans leur périmètre plusieurs couches superposées de matériel.

./...

EP 0 084 524 A2

FIG. 1

- 1 -

<u>Procédé et relative machine pour la récupération des effritements in-</u>
<u>dustriels en matériel thermoplastique.</u>

Cette demande de brevet pour une invention industrielle a comme objet un procédé et la relative machine pour la récupération des effritements industriels en matériel thermoplastique, comme par exemple les masselot tes, les bavures, les débris, les coupures des films.

Actuellement on emploie des machines de récupération plutôt compliquées et couteuses, où les rebuts, provenants de la moule ou des machines à découper ou à rogner, sont soumis en général à des traitements successifs.

Avant tout, l'on procède à un broyage, exécuté par des coutaeux tournants, à haute vitesse, sur le fond d'un contenant, avec l'autoréchauffement et la partielle fluidification conséquents du matériel broyé, c'est pour quoi à la sortie on obtient un produit granulaire, dont la forme et les dimensions sont absolument irrégulières, avec lequel il est tout à fait impossible d'alimenter les machines de tréfilage, qui exigent un produit granulaire, aux dimensions uniformes, sans impurités et sans polluants.

Dans les traditionelles machines de récupération, dont on vient de parler, après la première phase de broyage, il faut filtrer et tréfiler le matériel broyé en de longs fils que l'on coupe ensuite transversale ment en tête, à pas constant, de sorte que l'on obtienne une chute de petits cylindres ou cubes.

Les effritements industriels, transformés ainsi en un produit granulaire qui a maintenant des dimensions régulières et qui peut enfin être de nouveau utilisé pour produire des tréfilés, des extrusés ou des moulés.

Sans vouloir parler de la complexité et du prix élevé de ces machines, il faut pourtant noter que les phases de broyage initial et les succes sives de filtration et de tréfilage deviennent on ne peut plus problématiques surtout au cas où l'on doit récupérer des polymères de haute densité, étant donné leurs accentuées caractéristiques de résistence mécanique et de faible élasticité.

A' ces inconvénients et à d'autres aussi l'on porte remède par le procédé conforme à notre invention, grâce auquel il est possible de démouler directement des rebuts en un produit granulaire, immédiatement recyclé dans la production, sans que l'on soit obligé de traverser les procédés de transformation intermédiaires surindiqués.

Le procédé conformément à l'invention peut être, en outre, réalisé avec une machine on ne peut plus simple structurellement, économique et peu encombrante, à tel point qu'elle peut être conçue comme une unité acces soire et d'intégration pour chaque station d'opération où il peut y avoir des effritements de travail, avec une épargne de temps et de passages inutiles relatifs au ramassage et au transport des effritements jusqu'à l'installation de récupération, centralisée.

Le procédé conforme à notre invention se base essentiellement sur l'idée d'arriver au format granulaire, en pressant, en coupant et en thermosou dant dans leur périmètre plusieures couches superposées de matériel.

Ce precédé peut être réalisé par une machine qui, selon une forme préférée de réalisation, comprend:

- un plan de support pour une grille coupante, opportunément réchauffée, dont les carreaux peuvent avoir une section polygonale quelconque, suivant les préférences et les exigences;
- un élément mobile de pressage, qui agit au-dessus de la grille susdite;
- un équipement de ventilation pour le refroidissement des petits prismes de produit récupéré, à la sortie de la grille.

D'autres caractéristiques de cette invention et de ses avantages seront évidentes d'après la description suivante, réalisée en nous référant à

- 3 -                                          0084524

une forme préférée de réalisation de cette machine, illustrée d'une ma
nière schématique, simplement à titre d'exemple, non limitatif, dans
les dessins ci-joints, où:

- l'ill. 1 est une représentation schématique et axonométrique de la
machine qui péut actuer le procédé conformément à l'invention.

En nous référant à la susdite illustration, la machine comprend un plan
de travail (1) de support pour une grille (2) formée par plusieures la
mes qui s'entrecoupent orthogonalement, c'est pourquoi on a, en l'espè
ce, des sections de traversée quadrangulaires.

La grille coupante (2) en résulte réchauffée par des resistences élasti
ques, que nous n'avons pas reportées dans l'illustration, qui la maintiennent à una température suffisante pour avoir une thermosoudure au
périmètre des couches superposées de matériel, lesquelles sont pressées
sur la grille (2) par un plat mobile (3).

Les effritements ainsi accumulés sur la grille (2), soit régulièrement
superposés soit en désordre, sont de toute façon écrasés l'un sur l'autre
par le plat descendant (3) jusqu'au moment du véritable cisaillement de
ces effritements mêmes par le moyen des bords coupants des carreaux de
la grille (2), où le matériel de rebut est progressivement enfoncé et
poussé.

Les parois intérieures de chaque section de traversée, réchauffées à
la temperature nécessaire, réalisent une thermosoudure périmétrale entre les couches superposées de matériel, par conséquent de la grille
(2) se dégagent inférieurement plusieurs prismes compacts, qui tombent
dans une trémie, où ils sont mouvementés par un élément agitateur et
ils sont atteints par des courants d'air artificiels de refroidissement
et de là ils précipitent dans un contenant de ramassage.

Il est évident que l'expulsion de la grille se produit, à chaque descen
te du plat (3), par le moyen du nouveau matériel pressé, coupé et posé
dans les carreaux de la grille même.

Etant donné que la machine conforme à l'invention peut être placée à côté de la machine à rogner ou à découper, il est évident que les effritements sont préservés des impurités et des souillures, par conséquent le matériel récupéré peut tout de suite être recyclé dans la pro
duction.

Evidemment, la machine sera complète de thermostats, de temporisateurs
et des ordinaires appareils de régulation et de contrôle.

D'après ce que nous venons d'exposer, en nous référant aux illustrations
ci-jointes, il ne peut y avoir aucun doute sur la simplicité structurel
le de la machine conforme à l'invention, et par conséquent sur les coûts
peu élevés de sa réalisation.

Les problèmes qui concernent la récupération des polymères à haute densi
té dans les installations traditionelles n'ont plus lieu d'exister dans
le procédé de récupération conforme à l'invention, où il n'y a pas d'opé
rations de broyage, de filtration ou de tréfilage des effritements.

Il est entendu que cette description s'est rapportée à une forme préfé
rée de réalisation de la machine conforme à l'invention, en omettant
les détails constructifs qui concernent, par exemple, le circuit électri
que pour le réchauffement de la grille ou l'équipement de ventilation
pour le refroidissement du produit récupéré, car un technicien du secteur
peut facilement le concevoir et le réaliser suivant les différents, mais
équivalents systèmes de la technique ordinaire.

Par conséquent, de nombreuses variantes et modifications, surtout cons
tructives, peuvent être apportées à cette machine, c'est à dire l'emploi
d'un différent organe de pressage comme par ex. un rouleau compresseur,
et même un chavirement de la grille fixe par rapport à la plate-forme
mobile.

En effet, selon une autre forme préférée de réalisation de la machine
conforme à l'invention, la grille, réchauffée toujours électriquement,
pourrait être rendue mobile, prédisposée de façon qu'elle puisse s'éca
cher sur un plan fixe inférieur, où l'on a accumulé le matériel de rebut.

Ces variantes, qui seront d'ailleurs intuitives pour 1 s experts du secteur, ne s'éloignent pas du sujet de l'invention comme on vient de la décrire, de l'illustrer et comme on va la revendiquer.                 '

STUDIO DI CONSULENZA
BREVETTI   MARCHI
Dott. Ing. CLAUDIO BALDI
V/le della Vittoria 97 - J6° ( Tel

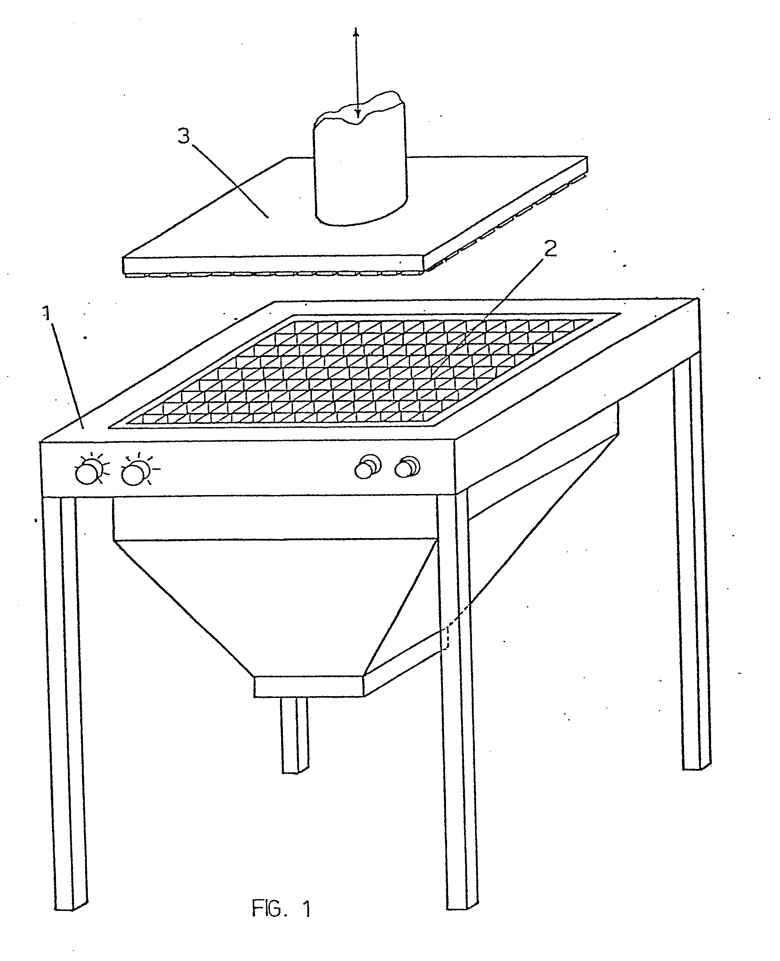

Revendications

1) Procédé pour la récupération des effritements industriels en matériel thermoplastique, caractérisé par le fait de prévoir, au but de transformer le matériel de rebut en un produit granulaire aux dimensions uniformes et régulières, un pressage des effritements contre une grille coupante, opportunément réchauffée par des résistences électriques, dans les carreaux de laquelle le matériel de rebut, coupé, est progressivement casé et enfoncé par un organe compresseur qui écrase et pousse les effritements, accumulés sur la grille, à travers la grille coupante elle--même; la température de la grille est naturellement suffisante pour réaliser une thermosoudure périmétrale des couches de matériel superposées, au fur et à mesure qu'elles traversent les carreaux de la grille, d'où sortent de petits prismes de matériel compact qui précipitent dans une trémie où ils sont mouvementés lentement par un organe agitateur et ils sont refroidis par des courants d'air artificiels.

2) Machine actuant le procédé de récupération des effritements industriels en matériel thermoplastique, voir la revendication précédente, caractérisée par le fait de comprendre, selon une forme préférée de réalisation:
- un plan de support pour une grille coupante, consituée par un grillage de lames qui délimitent des sections de traversée polygonales de petite aire;
- un plat mobile qui agit au-dessus de la grille susdite, capable d'écraser le matériel accumulé sur la grille jusqu'à obtenir le cisaillement et à le pousser dans les carreaux de la grille;
- une trémie de ramassage au-dessous du plan de support susdit dans laquelle le produit granulaire qui sort de sous la grille coupante est mouvementé lentement par un organe agitateur et refroidi par un venti-

- 2 -                    0084524

lateur.

3) Machine conforme à la revendication 2), caractérisée par le fait que la grille coupante susdite est réchauffée électriquement, avec la possibilité de régler la température.

STUDIO DI CONSULENZA
BREVETTI · MARCHI
Dott. Ing. CLAUDIO BALDI
V.le della Vittoria 37 · JESI · Tel. 4545

FIG. 1